# FASCICULE DE BREVET EUROPEEN

(11) **EP 4 307 520 B1**
(45) Date de publication et mention de la délivrance du brevet: **04.03.2026**
(21) Numéro de dépôt: 23184197.4
(22) Date de dépôt: 07.07.2023
(51) Int. Cl.: H02J 7/00, E06B 9/11, E06B 9/68

(54) **ACTIONNEUR POUR L'ENTRAINEMENT D'UN ECRAN A DISPOSITIF D'ALIMENTATION EXTERNE**
AKTUATOR FÜR DEN ANTRIEB EINES BILDSCHIRMS MIT EXTERNER STROMVERSORGUNG
ACTUATOR FOR DRIVING A DISPLAY WITH EXTERNAL POWER SUPPLY

(30) Priorité: 11.07.2022 FR 2207111
(43) Date de publication de la demande: 17.01.2024
(73) Titulaire: Somfy Activites SA, 74300 Cluses (FR)
(72) Inventeur: MEYLAN, Alexandre, 74300 CLUSES (FR)
(74) Mandataire: Bugnion Genève

(56) Documents cités:
- EP-A1- 3 091 170
- FR-A1- 3 115 555
- FR-A1- 3 118 500
- US-A1- 2017 356 243

## Description

### DOMAINE TECHNIQUE ET ART ANTERIEUR

La présente invention se rapporte à un actionneur pour l'entrainement entre plusieurs positions d'un écran de protection solaire ou d'occultation, tel qu'un volet.

Un exemple d'un actionneur pour l'entrainement entre plusieurs positions d'un écran de protection solaire ou d'occultation est décrit dans le document EP668431. Un autre exemple est le document EP 3 091 170.

De tels actionneurs pour volets ou stores roulants comportent un support de couple et un carter dans lequel sont logés un moteur électrique, un réducteur et un circuit de contrôle. Le carter présente une forme cylindrique de révolution. Le support de couple et le carter sont connectés mécaniquement l'un à l'autre. Le support de couple ou tête d'actionneur comprend des éléments de support destinés au montage de l'actionneur sur un bâti, c'est-à-dire sur une structure fixe d'un bâtiment dans lequel il est installé.

L'actionneur est destiné à être inséré au moins partiellement dans un tube d'enroulement sur lequel est destiné à s'enrouler l'écran de protection solaire ou d'occultation.

Le réducteur est prolongé par un arbre de sortie s'étendant à l'extérieur du carter et tournant par rapport au carter pour l'entraînement en rotation du tube d'enroulement, par exemple au travers d'un accessoire de liaison entre l'arbre de sortie et le tube d'enroulement.

Le circuit de contrôle se présente sous la forme d'un ou plusieurs circuits électroniques. Il gère notamment l'énergie électrique à fournir au moteur. Une ou plusieurs batteries d'alimentation connectées électriquement entre elles, sont logées dans un boîtier. L'ensemble de la ou les batteries et leur boîtier seront désignés par la suite « bloc batterie ». Le bloc batterie est externe au carter de l'actionneur et connecté électriquement à l'actionneur pour son alimentation en énergie. Le bloc batterie comporte un premier câble sortant du carter qui permet de connecter la ou les batteries au circuit de contrôle et fournir une alimentation au circuit de contrôle pour le fonctionnement du circuit électrique, et un deuxième câble permet de connecter la ou les batteries à un dispositif d'alimentation.

Le dispositif d'alimentation peut être un panneau photovoltaïque ou un dispositif branché sur secteur ou une autre réserve d'énergie rechargée lors d'une phase amont. Celui-ci permet la recharge du bloc batterie, notamment la recharge de la ou des batteries.

Généralement le dispositif d'alimentation comporte un connecteur d'un premier type et le bloc batterie comporte un deuxième connecteur compatible.

Le chargement du bloc batterie s'effectue sans que l'actionneur en soit informé. Ainsi l'actionneur ne peut par exemple pas informer l'utilisateur que le bloc batterie et en cours de recharge et prendre les mesures appropriées, par exemple passer en mode charge et suspendre son actionnement. En outre, du fait de l'absence d'information sur le niveau de charge de la batterie, ni sur son état de charge, aucun retour ne peut être fait à l'utilisateur.

### EXPOSÉ DE l'INVENTION

C'est par conséquent un but de la présente invention d'offrir un actionneur pour l'entraînement entre plusieurs positions d'un écran de protection solaire ou d'occultation, l'actionneur étant configuré pour être alimenté par une ou plusieurs batteries externes, ne présentant pas les inconvénients ci-dessus. Les caractéristiques de cet actionneur sont définies dans les revendications indépendantes et les modes de réalisations spécifiques sont définies dans les revendications dépendantes.

Le but énoncé ci-dessus est atteint par un actionneur pour l'entraînement entre plusieurs positions d'un écran de protection solaire ou d'occultation, l'actionneur comprenant un moteur électrique, un réducteur, un circuit de contrôle, au moins un connecteur standard destiné à connecter l'actionneur à une ou plusieurs batteries externes, le circuit de contrôle de l'actionneur comportant des moyens pour gérer l'état de charge de la ou des batteries.

Dans la présente demande, on entend par « gestion de l'état de charge de la ou des batteries » le fait de connaître le niveau de charge de la ou des batteries, de recevoir une information sur le fait qu'une phase de recharge est en cours et éventuellement de gérer la phase de recharge de la ou des batteries.

Très avantageusement, les moyens de gestion de charge comportent des moyens d'évaluation de l'état de charge du bloc batterie et des moyens de transmission d'une information relative à l'état de charge évalué et/ou d'émission d'au moins une instruction, par exemple à l'intention d'un dispositif d'alimentation.

Cette gestion de l'état de charge de la ou des batteries par le circuit de contrôle de l'actionneur permet notamment à l'actionneur d'être informé lorsque la ou les batteries sont en cours de rechargement et peut ainsi envoyer l'information à l'utilisateur. En outre, cette connaissance de l'état de charge de la ou des batteries peut permettre de gérer au mieux les étapes de rechargement et ainsi optimiser la durée de vie du bloc batterie.

L'information d'un état de charge et d'un niveau de charge suffisant permet par exemple de mettre en place des actions consommatrices d'énergie, comme par exemple la lecture du niveau de charge de la batterie, mais qui ne sont pas pénalisantes puisque la batterie est en en cours de recharge.

En d'autres termes, le circuit de contrôle comporte des moyens configurés pour au moins déterminer l'état de charge du bloc batterie et émettre un signal, le signal pouvant être à destination de l'utilisateur et/ou du dispositif d'alimentation et/ou de l'électronique du bloc batterie.

Dans un exemple de réalisation, le circuit de contrôle de l'actionneur gère la recharge de la ou des batteries par le dispositif d'alimentation.

Dans un autre exemple de réalisation, le circuit de contrôle de l'actionneur assure uniquement une supervision de l'état de charge de la ou des batteries, i.e. elle suit le niveau de charge et envoie par exemple une information à l'utilisateur, mais ne gère pas la recharge de la ou des batteries par le dispositif d'alimentation.

Dans un exemple de réalisation, l'actionneur comporte un connecteur et le bloc batterie comporte un connecteur, un câble en Y assure la connexion entre l'actionneur et le bloc batterie, et entre l'actionneur et le dispositif d'alimentation.

Dans un autre exemple de réalisation, l'actionneur comporte un connecteur et le bloc batterie comporte deux connecteurs l'un servant à connecter un câble reliant le bloc batterie à l'actionneur, ce câble assurant à la fois la fourniture de puissance électrique pour alimenter l'actionneur et les informations relatives à la charge de la ou des batteries, et l'autre connecteur servant à connecter un câble reliant le bloc batterie au dispositif d'alimentation.

Dans un autre exemple de réalisation avantageux, l'actionneur comporte un premier connecteur de connexion à la batterie ou les batteries, et un deuxième connecteur, avantageusement de type USB^{®}-C pour la connexion au dispositif d'alimentation. Le circuit de contrôle peut également comporter des moyens de transmission d'une requête d'un profil d'alimentation comprenant au moins une tension fixe et un courant maximum à un dispositif d'alimentation.

Dans un exemple avantageux, l'actionneur peut détecter le type du dispositif d'alimentation, dispositif d'alimentation branché sur le secteur ou panneau photovoltaïque ou autre réserve d'énergie et émettre des signaux en conséquence.

Dans un exemple avantageux, l'actionneur et son deuxième connecteur sont configurés pour supporter une technologie de fourniture d'énergie PD (Power Delivery en terminologie anglo-saxonne) selon laquelle une tension fixe en entrée de l'actionneur avec un courant maximum est adaptée aux besoins de l'actionneur suivant le profil d'alimentation sélectionné par l'actionneur et transmis par l'actionneur au dispositif d'alimentation. A cet effet, l'actionneur, notamment le circuit de contrôle, comprend par exemple un régulateur entre le deuxième connecteur et la ou les batteries. Le régulateur est configuré pour charger la ou les batteries selon le niveau de tension et de courant requis par celles-ci à partir de la tension et du courant en entrée du deuxième connecteur. Ceci permet une charge rapide de la ou des batteries.

Alternativement ou en complément de la technologie PD, l'actionneur et son deuxième connecteur sont configurés pour supporter une technologie d'alimentation programmable PPS (Programmable Power Supply en terminologie anglosaxonne) selon laquelle la tension et le courant sont adaptés de manière dynamique en fonction de l'état déterminé de la ou des batteries. L'actionneur est adapté à évaluer les paramètres d'alimentation de la ou des batteries et à transmettre une information relative aux paramètres d'alimentation évalués au travers du deuxième connecteur standard. L'échange d'informations permet d'ajuster de manière dynamique la tension et le courant délivrés par le dispositif d'alimentation au circuit de contrôle pour recharger de manière appropriée le bloc batterie. La recharge est alors réalisée en connaissant le niveau de charge de la ou des batteries et la disponibilité en énergie (tension et courant) du dispositif d'alimentation. Ces échanges de données ont par exemple lieu de manière régulière, par exemple toutes les 10 secondes ou toutes les minutes ou toutes les 10 minutes. L'actionneur comprend ainsi des moyens d'évaluation de paramètres d'alimentation de la au moins une batterie et des moyens de transmission d'une information relative aux paramètres d'alimentation évalués au travers du deuxième connecteur standard. Ainsi, le profil d'alimentation requis est réévalué et renégocié régulièrement pour s'adapter aux besoins de la ou des batteries dans l'objectif d'optimiser sa charge, permettant ainsi une charge efficace.

En optimisant la charge, la durée de vie de la ou des batteries est augmentée.

Dans un exemple particulièrement avantageux, le connecteur standard est de type USB-C (également noté USB Type-C^{®}). Ce connecteur présente l'avantage d'être symétrique ainsi sa connexion à un dispositif d'alimentation présentant un connecteur correspondant est très aisée. En outre l'actionneur supporte une technologie de fourniture d'énergie PD, compatible avec les versions 3.0 et versions supérieures du deuxième connecteur USB-C, ce qui permet notamment une charge rapide et une tension d'alimentation élevée.

Une communication mise en place entre le dispositif d'alimentation et l'actionneur permet à l'actionneur de détecter à quel type de dispositif d'alimentation il est connecté, soit un dispositif d'alimentation connecté au secteur, soit un panneau photovoltaïque, soit une autre réserve d'énergie. La procédure de charge est alors adaptée au type de dispositif d'alimentation.

Cette connaissance du type de dispositif d'alimentation par l'actionneur permet également d'adapter les retours d'informations fournis à l'utilisateur par exemple pour indiquer l'état de l'actionneur, par exemple en cours de charge ou chargé.

L'objet de la présente invention est alors un actionneur pour l'entraînement entre plusieurs positions d'un écran de protection solaire ou d'occultation, comportant un carter logeant un moteur électrique, un réducteur, un circuit de contrôle, ledit actionneur étant destiné à être connecté à un bloc batterie externe destiné à fournir la puissance électrique du moteur et du circuit de contrôle, ledit actionneur comportant au moins un connecteur relié audit circuit de contrôle, ledit connecteur étant configuré pour l'alimentation électrique de l'actionneur. Le connecteur est configuré pour au moins transmettre des informations sur le bloc batterie, et le circuit de contrôle comporte des moyens d'acquisition d'une information sur la tension et sur le courant aux bornes du bloc batterie et des moyens de génération d'au moins un signal sur la base desdites informations.

Dans un exemple de réalisation, le au moins un signal est un message d'information à l'utilisateur.

Très avantageusement, le circuit de contrôle est configuré pour déterminer si le bloc batterie est en phase de charge ou non, désigné état de charge du bloc batterie, et pour transmettre une information relative à l'état de charge du bloc batterie et/ou intensifier le suivi du niveau de charge du bloc batterie en phase de charge.

Dans un exemple préféré, le circuit de contrôle est configuré pour gérer la charge du bloc batterie par un dispositif d'alimentation.

Dans un exemple de réalisation, le connecteur est configuré pour être relié par une connexion filaire à la fois au bloc batterie et à un dispositif d'alimentation. Le connecteur peut comporter une pluralité de broches, une partie des broches étant utilisée pour l'alimentation et une autre partie pour la transmission d'informations.

Dans un autre exemple de réalisation, le connecteur peut comporter un premier connecteur configuré pour être relié au bloc batterie et un deuxième connecteur destiné à être relié au dispositif d'alimentation.

De préférence, le deuxième connecteur répond à la norme USB^{®} type C 3.0 et est avantageusement configuré pour transmettre des informations suivant une technologie de fourniture d'énergie PD (Power Delivery en terminologie anglosaxonne) et éventuellement selon une technologie d'alimentation programmable PPS (Programmable Power Supply en terminologie anglosaxonne).

Dans un exemple avantageux, le circuit de contrôle comporte des moyens de transmission d'une requête d'un profil d'alimentation comprenant au moins une tension fixe et un courant maximum au dispositif d'alimentation. Le circuit de contrôle peut comprendre un régulateur disposé entre le deuxième connecteur et le bloc batterie, le régulateur étant configuré pour charger le bloc batterie à partir de la tension et du courant fourni par le dispositif d'alimentation.

Le circuit de contrôle est avantageusement configuré pour gérer l'alimentation du bloc batterie selon un premier mode lorsque la tension et le courant en entrée du deuxième connecteur correspondent au profil d'alimentation requis par l'actionneur et selon un deuxième mode lorsque la tension et le courant en entrée du deuxième connecteur diffèrent du profil d'alimentation requis par l'actionneur.

Dans un exemple de réalisation préféré, le circuit de contrôle comprend une première carte de circuit portant un circuit de contrôle du moteur électrique et une deuxième carte de circuit portant le connecteur, la deuxième carte étant disposée perpendiculairement à l'axe longitudinal à une extrémité longitudinale du carter, le connecteur étant orienté radialement par rapport l'axe longitudinal.

Le connecteur comprend avantageusement un plan de symétrie, et la deuxième carte de circuit comporte une découpe dans laquelle est monté le connecteur. Le plan de symétrie est avantageusement sensiblement confondu avec un plan dans lequel s'étend la deuxième carte.

Un autre objet de la présente demande est un ensemble comportant un actionneur selon l'invention, un bloc batterie et un dispositif d'alimentation du bloc batterie externe.

Le dispositif d'alimentation peut comporter au moins un connecteur compatible avec le connecteur de l'actionneur et le dispositif d'alimentation peut être configuré pour suivre des instructions du circuit de contrôle de l'actionneur.

Un autre objet de la présente demande est un procédé de fonctionnement d'un ensemble selon l'invention, comportant les étapes :
- Réception par le circuit de contrôle d'informations sur la tension et le courant du bloc batterie,
- Envoi d'informations à un utilisateur et/ ou au dispositif d'alimentation et/ou d'instructions au dispositif d'alimentation par le circuit de contrôle.

### BREVE DESCRIPTION DES DESSINS

La présente invention sera mieux comprise à l'aide de la description qui va suivre et dessins en annexe dans lesquels :
- La figure 1A est une vue de côté d'un exemple d'un système pour l'entrainement d'un écran de protection solaire ou d'occultation selon l'invention,
- La figure 1B est une vue éclatée de l'actionneur de la figure 1A,
- La figure 2A est une représentation schématique d'un exemple de la connexion entre l'actionneur, le bloc batterie et le dispositif d'alimentation,
- La figure 2B est une représentation schématique d'un autre exemple de la connexion entre l'actionneur, le bloc batterie et le dispositif d'alimentation,
- La figure 2C est une représentation schématique d'un autre exemple de la connexion entre l'actionneur, le bloc batterie et le dispositif d'alimentation,
- La figure 3A est une vue en perspective d'un exemple de connecteur particulièrement adapté à l'invention,
- La figure 3B est une vue en perspective d'un exemple de connecteur magnétique,
- La figure 4 représente un schéma fonctionnel de la connexion entre l'actionneur selon un exemple de réalisation et un dispositif d'alimentation,
- La figure 5 est un organigramme d'un exemple d'un procédé de recharge d'un actionneur selon un exemple de réalisation,
- La figure 6 est une vue de face d'un exemple de deuxième carte pouvant être mis en œuvre dans l'actionneur de la figure 1A,
- La figure 7 est une vue en perspective de la deuxième carte de la figure 6,
- La figure 8 est une vue de côté d'un support de couple intégrant la deuxième carte de la figure 6,
- La figure 9 est une vue en perspective d'un autre exemple d'un support de couple d'actionneur selon l'invention,
- La figure 10 est une vue de dessus du support de couple de la figure 9.

### DESCRIPTION DÉTAILLÉE DE MODES DE RÉALISATION

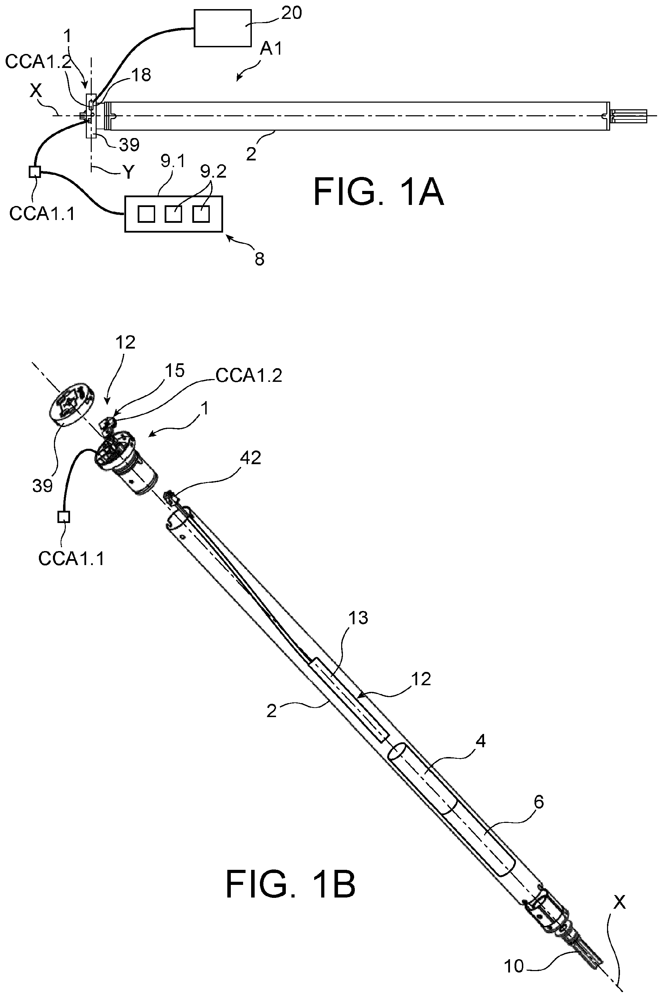

Sur les figures 1A et 1B, on peut voir une représentation schématique d'un exemple d'un système pour l'entraînement entre plusieurs positions d'un écran de protection solaire ou d'occultation (non représenté), tel qu'un store, volet ou autre.

Le système comporte un actionneur A1 qui a une forme générale cylindrique de révolution d'axe X. L'actionneur A1 comporte une tête ou support de couple 1, un carter 2 d'axe X, un moteur électrique 4 d'axe X, un réducteur 6. Le réducteur 6 se prolonge par un arbre de sortie 10 s'étendant le long de l'axe X destiné à entraîner en rotation un élément (non représenté) appartenant à l'écran ou un tube d'enroulement sur lequel est monté l'écran.

Le système d'actionneur comporte également un bloc batterie 8 destiné à fournir la puissance électrique au moteur électrique utile pour sa rotation. Le bloc batterie 8 est disposé à l'extérieur du carter de l'actionneur et est connecté à celui-ci par une liaison filaire. Le bloc batterie 8 comporte un boîtier 9.1 et une ou plusieurs batteries électriques 9.2 connectées en parallèle ou en série, logeant dans le boîtier 9.1.

L'actionneur A1 comporte en outre un circuit de contrôle 12 du moteur électrique formé par une ou plusieurs cartes de circuit. Ce circuit 12 est connecté au moteur 4 et à la batterie 8.

Le bloc batterie 8 est également destiné à fournir l'alimentation au circuit de contrôle 12.

Dans l'exemple représenté, le circuit de contrôle 12 comprend notamment une première carte de circuit 13 qui, dans l'exemple représenté, est disposée parallèlement à l'axe X. Le circuit de contrôle 12 comprend également une deuxième carte de circuit 15, qui dans l'exemple représenté à la figure 1B est située à une extrémité longitudinale du carter dans le support de couple 1 et est disposée orthogonalement à l'axe X.

Le circuit de contrôle 12 comporte une unité de communication externe permettant une liaison de communication avec un dispositif extérieur, notamment une communication par ondes radiofréquences. L'unité de communication peut être portée par une ou plusieurs des cartes de circuit du circuit de contrôle.

L'unité de communication externe comprend notamment un émetteur-récepteur radiofréquence (par l'intermédiaire duquel des ordres de mouvement de l'écran peuvent être transmis depuis une télécommande radio non représentée) et des éléments de communication physique pour un utilisateur, comme une diode lumineuse ou LED et/ou un bouton de programmation.

L'actionneur A1 comporte au moins un connecteur CCA1 destiné à permettre la connexion au bloc batterie 8 pour alimenter le bloc batterie et/ou à un dispositif d'alimentation 20. Dans l'exemple des figures 1A et 1B et de manière avantageuse, l'actionneur comporte un premier connecteur CCA1.1 reliant l'actionneur et le bloc batterie. L'actionneur comporte également un deuxième connecteur CCA1.2 destiné à la connexion entre l'actionneur et le dispositif d'alimentation.

Selon l'invention, l'actionneur A1 est au moins capable d'acquérir des informations sur le bloc batterie 8 au travers du connecteur CCA1, CCA1.1. Le fait d'utiliser l'actionneur comme intermédiaire de gestion de la charge du bloc batterie permet à l'actionneur d'être informé lorsque le bloc batterie est en phase de charge. Cette information peut alors être transmise à l'utilisateur, par exemple, par une interface homme-machine, telle qu'une diode qui s'éclaire en phase de charge.

Le circuit de contrôle 12 comporte des moyens au moins configurés pour acquérir des informations sur le bloc batterie, notamment sur la tension et/ou le courant aux bornes du bloc batterie. Cette acquisition se fait par l'intermédiaire du connecteur CCA1, CCA1.1 permettant la connexion entre le bloc batterie et l'actionneur. Ce connecteur est configuré pour, à la fois, assurer l'alimentation électrique de l'actionneur et l'acquisition d'informations avec l'électronique du bloc batterie pour au moins générer l'envoi d'informations. Dans un autre exemple de réalisation, le connecteur de l'actionneur et l'électronique du bloc batterie sont configurés pour assurer un échange de données entre eux.

L'acquisition de la tension et du courant aux bornes du bloc batterie permet de connaître ou déterminer son niveau de charge. Dans un exemple de réalisation, le circuit de commande 12 génère au moins un signal, qui peut être un message d'information à l'utilisateur sur le niveau de charge du bloc batterie.

De manière avantageuse, le circuit de contrôle est configuré pour déterminer l'état de charge du bloc batterie, i.e. si le bloc batterie est en cours de charge ou non, et pour émettre un signal d'information à l'utilisateur sur cet état. En outre le circuit de contrôle peut avantageusement commander des actions de surveillance du bloc batterie qui seront décrites ci-dessous.

Le circuit de contrôle peut également avantageusement être configuré pour gérer la charge du bloc batterie par le dispositif d'alimentation. Dans ce cas des échanges d'information peuvent s'établir entre l'actionneur et le dispositif d'alimentation.

En outre, le câble assurant la connexion entre les connecteurs CCA1, CCA1.1 et le bloc batterie est tel qu'il permet au moins l'alimentation de l'actionneur par la batterie et l'acquisition et/ou l'échange d'informations.

Par exemple, le dispositif d'alimentation peut être un dispositif photovoltaïque ou un dispositif branché sur le secteur ou une autre réserve d'énergie rechargée lors d'une phase amont précédant la connexion au bloc batterie à recharger.

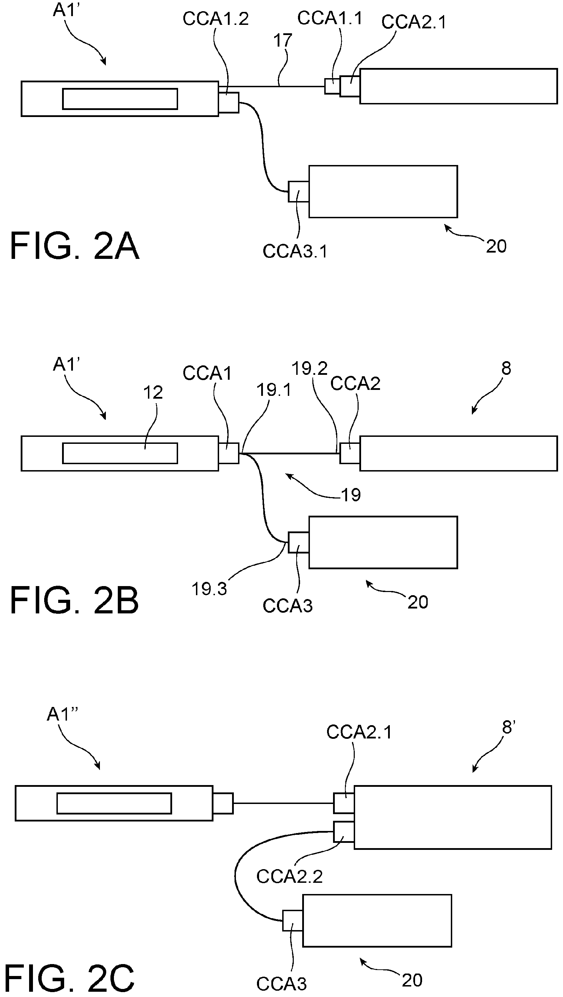

Sur la figure 2A, on peut voir un exemple préféré de réalisation dans lequel l'actionneur A1 comporte un fil 17 sortant de l'actionneur, ce fil étant relié au circuit de contrôle, plus particulièrement il est branché par une première extrémité sur la deuxième carte de circuit et comporte à une deuxième extrémité un premier connecteur CCA1.1 coopérant avec un connecteur du bloc batterie CCA2.1. Par exemple le connecteur CCA1.1 est un connecteur à deux lignes d'alimentation, comprenant éventuellement également une ou plusieurs lignes de transmission de données. L'actionneur A1 comporte un deuxième connecteur CCA1.2 relié à un connecteur CCA3.1 du dispositif d'alimentation 20.

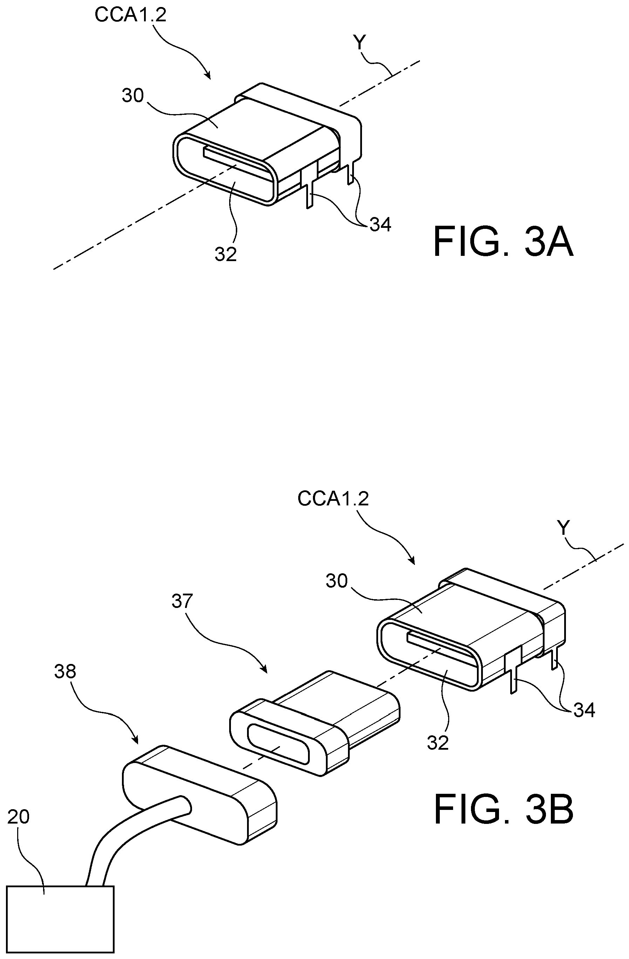

Le connecteur CCA1.2 est avantageusement de type bus universel en série ou port USB-C^{®} (Universal Serial Bus en terminologie anglo-saxonne), comme cela est représenté sur la figure 3A. Ce connecteur présente l'avantage d'avoir deux plans de symétrie orthogonaux, il est réversible et non polarisé, ce qui permet de le brancher facilement dans n'importe quel sens, ce qui facilite la connexion à la source de recharge. Un exemple de connecteur USB-C ^{®} femelle désigné par la référence CCA1.2 est représenté seul sur la figure 3A. Le connecteur USB-C femelle CCA1.2 comporte un corps 30 s'étendant selon un axe Y et présentant une section transversale oblongue. Le connecteur comporte une extrémité d'ouverture 32 permettant l'insertion d'un deuxième connecteur mâle correspondant. Le corps 30 comporte des pattes de fixation 34 s'étendant latéralement de part et d'autre de l'axe X. Les pattes sont destinées à traverser la carte de circuit et à être soudées sur la face opposée.

Le connecteur CCA3.1 du dispositif d'alimentation 20 est un connecteur muni de broches destinées à l'alimentation et de broches destinées au transport de données. Par exemple il peut s'agir d'un connecteur de type JST^{®} ou Molex^{®}, le connecteur CCA3.1 peut également être un connecteur USB-C^{®}. Le câble reliant les connecteurs CCA1.2 et CCA3.1 peut être muni à ses extrémités de connecteurs compatibles avec les connecteurs CCA1.2 et CCA3.1, afin d'assurer la liaison d'alimentation et de données entre les connecteurs CCA1.2 et CCA3.1.

De préférence les connecteurs notamment le connecteurs CCA1.2 est choisi pour assurer une compatibilité ascendante avec les accessoires bloc batterie et panneau photovoltaïque ou dispositif d'alimentation sur secteur ou réserve d'énergie existants.

La connexion entre l'actionneur et le bloc batterie permet l'alimentation de l'actionneur par le bloc batterie, le transfert d'informations relatives au bloc batterie vers l'actionneur et la recharge du bloc batterie par le dispositif d'alimentation via l'actionneur.

Sur la figure 2B, on peut un autre exemple d'actionneur A1' et de connexion avec le bloc batterie et le dispositif de recharge 20.

Dans cet exemple, la connexion est réalisée au moyen d'un câble en Y 19 comportant une extrémité commune 19.1 connectée au connecteur CCA1 de l'actionneur, l'extrémité commune 19.1 comporte un connecteur adapté à coopérer avec le connecteur CCA1. Le câble en Y 19 comporte également une extrémité 19.2 connectée au connecteur CCA2 du bloc d'alimentation et une extrémité 19.3 connectée au dispositif d'alimentation.

L'extrémité 19.1 peut être directement connectée à la deuxième carte de circuit, un fil sortant de l'actionneur, le connecteur CCA1 étant alors la connexion entre l'extrémité 19.1 et la deuxième carte de circuit.

L'extrémité 19.2 comporte un connecteur adapté à coopérer avec le connecteur CCA2, et l'extrémité 19.3 comporte un connecteur adapté à coopérer avec le connecteur CCA3 du dispositif d'alimentation.

Les connecteurs et le câble en Y sont tels qu'ils permettent l'alimentation de l'actionneur par le bloc batterie et l'alimentation du bloc batterie par le dispositif d'alimentation. Les connecteurs comportent des broches pour permettre ces alimentations et le transfert d'informations, voire l'échange d'informations.

Le connecteur CCA1 est un connecteur standard permettant à la fois l'alimentation de l'actionneur par la batterie et au moins l'acquisition d'informations sur le niveau de charge de la batterie.

Les connecteurs CCA1 et CCA3 peuvent être, de manière non limitative des connecteurs USB-C^{®}, et le connecteur CCA2 peut être un connecteur trois points.

De préférence, le connecteur CCA1 est configuré pour transmettre une information émise par le circuit de contrôle au dispositif d'alimentation.

Dans un autre exemple de réalisation représenté sur la figure 2C, le dispositif d'alimentation 20 est relié au bloc batterie directement par une connexion filaire. Un circuit de connexion est représenté schématiquement sur la figure 2C. A cet effet, le bloc batterie 8' comporte un connecteur CCA2.1 pour une connexion filaire avec l'actionneur A1" et un connecteur CCA2.2 pour une connexion filaire avec le dispositif d'alimentation 20.

Un procédé de recharge du bloc batterie va maintenant être décrit. Le circuit de contrôle de l'actionneur reçoit des informations sur le bloc batterie, notamment sur la tension et le courant aux bornes du bloc batterie, il en déduit un niveau de charge et peut générer un signal par exemple à l'utilisateur, par exemple en éclairant une ou plusieurs diodes et/ou en envoyant un signal au dispositif d'alimentation. Par exemple lorsqu'il détecte que le niveau de charge du bloc batterie est inférieur à un seuil donné, il envoie une instruction de charger le bloc batterie. Lorsque le niveau de charge est considéré comme suffisant, l'arrêt de la phase de charge est ordonné. En variante, la charge est interrompue après un temps de charge pré-défini ou calculé sur la base des informations issues du bloc batterie.

Dans un autre procédé de fonctionnement, le circuit de contrôle acquiert la connaissance de l'état de charge du bloc batterie, i.e. si le bloc batterie est en phase de charge ou pas ; par exemple si le source d'énergie est disponible pour fournir de l'énergie, par exemple si un panneau photovoltaïque est éclairé. A partir de cette information, le circuit de contrôle peut déterminer une information à transmettre à l'utilisateur. En outre cette connaissance d'un état de charge permet au circuit de contrôle de modifier le mode de suivi de la charge et peut décider de faire des mesures de niveau de charge plus régulièrement lorsque le bloc batterie est en phase de charge, c'est-à-dire à une fréquence supérieure à une fréquence de mesure en phase sans recharge, et donc d'informer l'utilisateur avec des informations plus à jour. En effet ces mesures sont consommatrices d'énergie, mais puisque la source d'énergie est en situation de fournir de l'énergie, ces mesures sont peu ou pas pénalisantes pour l'installation.

Lorsque le circuit de contrôle est de fait notifié de la phase de charge du bloc batterie, l'actionneur informe avantageusement l'utilisateur par exemple en allumant une diode, et adapte le mode de fonctionnement.

A la fin de la phase de charge, l'actionneur informe l'utilisateur de la fin de la phase de charge en éteignant la diode ou en changeant la couleur de celle-ci, et revient au mode de fonctionnement dans un état chargé.

Les connecteurs permettant la connexion entre l'actionneur et le bloc batterie sont tels qu'ils permettent une acquisition d'informations sur l'état du bloc batterie ou un échange d'informations entre l'actionneur et le bloc batterie, ce qui permet à l'actionneur de gérer la charge du bloc batterie.

Dans un exemple de réalisation, l'actionneur gère uniquement le retour d'information sur le niveau de charge/état de charge de la batterie vers l'utilisateur.

Dans un exemple de réalisation avantageux, l'actionneur participe à la gestion de la charge, ce qui peut permettre de mutualiser des composants de gestion de charge et de mettre en place une supervision adaptée à la phase de charge, comme cela a été décrit ci-dessus.

Le circuit de contrôle de l'actionneur est avantageusement configuré pour permettre une recharge efficace du bloc batterie.

Très avantageusement, le circuit de contrôle comprend des moyens de transmission, au dispositif d'alimentation, d'une requête d'un profil d'alimentation comprenant au moins une tension fixe et un courant maximum. L'actionneur de la figure 2A est particulièrement adapté à la mise en œuvre d'un tel circuit de contrôle, notamment avec un deuxième connecteur CCA1.2 de type USB-C^{®}.

Un profil d'alimentation comprend notamment une valeur de tension donnée, dite tension fixe, et une valeur de courant maximum. Il est bien entendu que la tension du profil d'alimentation effectivement fournie par le dispositif d'alimentation peut varier sensiblement par rapport à la tension fixe requise, tout en restant dans le même ordre de grandeur.

Le circuit de contrôle comporte avantageusement un régulateur configuré pour charger la ou les batteries à partir de la tension et du courant en entrée du connecteur de recharge CCA1.2. Le régulateur permet une adaptation de la charge à partir du profil réellement transmis par le dispositif d'alimentation, en effet comme cela sera décrit par la suite, plusieurs profils sont possibles. Le régulateur est un composant électronique, nommé aussi chargeur abaisseur-élévateur pour les batteries Li-lon (buck-boost Li-lon battery charger en terminologie anglo-saxonne). Par exemple, dans le cas d'un connecteur USB standard à 5V, la tension peut atteindre 15V. A 5V, le régulateur adapte alors la charge pour les batteries.

De manière très avantageuse et comme cela est représenté sur la figure 3B, les connecteurs USB-C^{®} sont eux-mêmes connectés à un adaptateur magnétique 37, ce qui permet une connexion facilitée par exemple « en aveugle », notamment pour un actionneur peu accessible. Le connecteur 38 du câble destiné à venir se connecter est également magnétique pour venir se connecter avec l'adaptateur.

Nous allons décrire plus particulièrement un exemple avantageux d'actionneur comportant un premier connecteur ou un deuxième connecteur de type USB-C^{®}.

De manière préférée, l'actionneur supporte la technologie PD, pour Power Delivery en terminologie anglo-saxonne ou Fourniture d'énergie, et encore plus préférée la technologie PD et la technologie PPS pour Programmable Power Supply en terminologie anglosaxonne ou Alimentation programmable, associées à la norme USB version 3.0 et suivante.

La technologie de fourniture d'énergie PD permet de délivrer une puissance plus importante à la batterie et de réaliser des charges plus rapides qu'un connecteur non compatible avec cette technologie.

La technologie d'alimentation programmable PPS assure une communication renégociée régulièrement entre la batterie et le dispositif d'alimentation, permettant que le dispositif d'alimentation puisse ajuster de manière dynamique la tension et le courant en fonction de l'état de charge de la batterie déterminée par l'actionneur. Régulièrement, l'ensemble de ces paramètres change pour s'adapter aux besoins réactualisés de la batterie, ce qui permet d'optimiser sa charge, et d'allonger la durée de vie de la batterie.

L'ajustement de la puissance de charge selon le besoin de la batterie selon la technologie d'alimentation programmable PPS permet de réduire la surchauffe des batteries, d'augmenter leur durée de vie et d'optimiser la recharge.

Les technologies PD et PPS sont supportées par l'actionneur et éventuellement par le dispositif d'alimentation externe.

Lors de la connexion de l'actionneur au dispositif d'alimentation, plusieurs échanges ont lieu consécutivement, par exemple 4 ou 5.

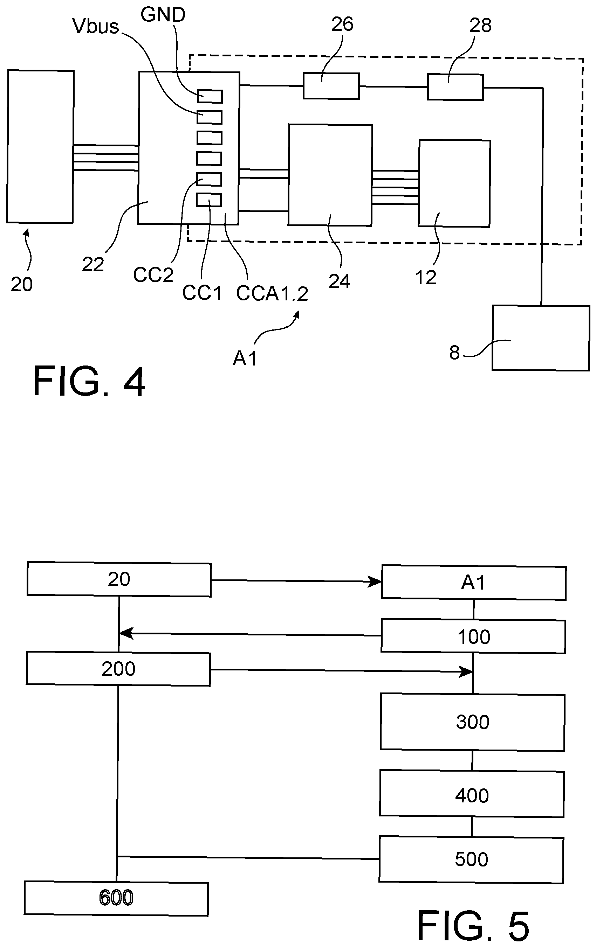

Sur la figure 4, on peut voir un schéma fonctionnel d'un exemple d'un dispositif d'alimentation 20 connecté au système de la figure 2A. La partie délimitée par le trait interrompu représente une partie du circuit de contrôle. Il sera compris que le schéma fonctionnel de la figure 4 est à adapter aux systèmes des figures 2B et 2C.

Le dispositif d'alimentation 20 comporte un circuit de commande 22 configuré pour supporter la technologie de fourniture d'énergie PD et éventuellement la technologie d'alimentation programmable PPS.

A titre d'exemple, le deuxième connecteur CCA1.2 comporte 16 ou 24 broches.

Parmi ces broches, les bornes de masse GND, d'alimentation Vbus et de données CC1 et CC2 sont utilisées.

Les broches VBus sont utilisées pour l'alimentation de l'actionneur. Très avantageusement, les mêmes broches VBus sont utilisées quel que soit le dispositif d'alimentation, que ce soit un dispositif d'alimentation branché ou rechargeable sur secteur ou un panneau photovoltaïque.

Les broches CC1 et CC2 sont utilisées pour le dialogue entre le dispositif d'alimentation et l'actionneur. Très avantageusement, on utilise les mêmes broches CC1 et CC2 pour les échanges avec un dispositif d'alimentation branché ou rechargeable sur secteur et avec un panneau photovoltaïque. D'autres données sont également transmises de la deuxième carte à la première carte, par exemple des informations supplémentaires sur l'interface homme-machine, qui peut comprendre par exemple la ou les diodes, le ou les boutons, le protocole industriel de remise à zéro, le reréglage...

On peut prévoir que les mêmes broches soient utilisées lors d'une phase de recharge quel que soit le dispositif d'alimentation.

En utilisant les mêmes broches, on limite le nombre de connexions électriques à mettre en place entre chacun des connecteurs et le circuit de commande.

Dans un autre exemple de réalisation, une broche Rx et une broche Tx sont utilisées pour le pilotage et la configuration de l'actionneur en usine ou sur le site d'installation. Ainsi le deuxième connecteur CCA1.2 peut être utilisé à la fois pour la recharge de la ou des batteries et pour le pilotage et la configuration de l'actionneur.

Pour ce faire, au travers de la connectique du deuxième connecteur CCA1.2, des informations de mise en relation ou appairage et de réglage peuvent être mises en œuvre à partir d'un outil de réglage tel qu'un ordinateur personnel ou un outil d'installation spécifique, muni d'un port de sortie comprenant un connecteur compatible avec le deuxième connecteur de l'actionneur.

Avantageusement, l'outil de réglage comprend également des moyens pour fournir une alimentation de recharge de la batterie de l'actionneur et des moyens d'interface homme-machine permettant à un installateur de saisir des données à transmettre au circuit de contrôle de l'actionneur.

Certaines broches du deuxième connecteur peuvent ainsi être utiles pour fournir à l'actionneur des données de réglage et/ou pour récupérer depuis l'actionneur des données utiles à un diagnostic. L'utilisation de ces broches pour la transmission de données est indépendante de la présence ou non d'un courant ou d'une tension d'alimentation pour la recharge de la batterie : les étapes de réglages peuvent donc avoir lieu de manière simultanée avec une étape de rechargement de la batterie de l'actionneur.

Dans cet exemple de réalisation et de manière non limitative, le circuit de contrôle 12 représenté partiellement comporte un circuit intégré de protection 24 du connecteur de recharge, ce circuit protégeant des conséquences d'un court-circuit. Le circuit intégré de protection peut comporter des diodes de suppression de tensions transitoires ou diodes TVS (Transient Voltage Suppression en terminologie anglosaxonne). Ce circuit intégré de protection 24 est interposé entre le connecteur et le circuit de contrôle. Le circuit de contrôle comporte également un interrupteur 26 entre le deuxième connecteur CCA1.2 et la batterie, l'interrupteur 26 est piloté par le circuit intégré de protection 24.

Le circuit de contrôle également un dispositif de gestion d'alimentation 28 interposé entre la batterie et l'interrupteur 26 et commandé par le circuit de contrôle.

Très avantageusement, il est prévu un procédé d'alimentation utilisable également dans le cas où la batterie est complètement déchargée. Ce mode est appelé mode « dead battery » en terminologie anglosaxonne. Dans ce cas de batterie déchargée, le procédé d'alimentation comprend une étape d'envoi, par le dispositif d'alimentation d'une tension faible pour initier la communication avec l'actionneur. Par exemple la tension minimum pour initier la communication est de l'ordre de 5V. En particulier, cette étape d'envoi fait suite à une période prédéfinie suite à une connexion entre l'actionneur et le dispositif d'alimentation, pendant laquelle, l'actionneur n'étant plus suffisamment chargé pour requérir un profil d'alimentation, aucune information n'est reçue par le dispositif d'alimentation.

Dans ce cas, l'étape d'envoi d'une tension minimum permet à l'actionneur d'initier l'étape de transmission de requête du procédé d'alimentation.

Le processus de charge peut également être adapté en fonction de la température extérieure, ce qui permet d'optimiser la durée de vie de la batterie. En particulier, la température interne à l'actionneur est un paramètre complémentaire qui peut influencer le choix d'un profil d'alimentation à requérir. Ainsi, le profil d'alimentation requis lors de l'étape de transmission tient compte de la température estimée ou mesurée préalablement à la transmission.

Un exemple du déroulement d'un procédé d'alimentation du bloc batterie dans le cas d'un actionneur comprenant un circuit de contrôle comprenant des moyens de transmission, au dispositif d'alimentation, d'une requête d'un profil d'alimentation comprenant au moins une tension fixe et un courant maximum, va maintenant être décrit à l'aide de la figure 5.

L'actionneur, qui est en permanence connecté au bloc batterie externe, est connecté à un dispositif d'alimentation par le deuxième connecteurCCA1.2 par exemple comme représenté sur la figure 2A. Des échanges d'information entre l'actionneur et le dispositif d'alimentation se mettent alors en place.

Au cours d'une étape de demande de capacités 100, l'actionneur demande au dispositif d'alimentation ses capacités de charge. Celles-ci sont en effet différentes s'il s'agit d'un dispositif d'alimentation branché sur secteur ou un panneau photovoltaïque ou une autre réserve d'énergie, rechargée lors d'une phase amont. En effet, par exemple la puissance délivrable par le dispositif d'alimentation sur secteur est différente de celle délivrable par le panneau photovoltaïque. Elles sont également différentes en fonction des technologies avec lesquelles le dispositif d'alimentation est compatible, notamment les technologies PD et/ou PPS. Dans le cas de ce dispositif d'alimentation non compatible avec les technologies PD ou PPS, les valeurs de tension et de courant qui peuvent être transmises par le dispositif d'alimentation sont uniques et fixes.

Lors d'une étape 200, soit le dispositif d'alimentation répond à l'actionneur en fournissant une information sur ses capacités, au cours d'une étape de réponse, soit le dispositif d'alimentation fournit une tension et un courant disponibles au cours de cette étape de réponse.

Au cours d'une étape facultative d'évaluation 300, l'actionneur évalue les besoins de rechargement de la batterie, autrement dit les paramètres d'alimentation adaptés à la situation de la batterie. Cette étape a lieu lorsque l'actionneur supporte la technologie PPS.

Au cours d'une étape de sélection 400 et dans le cas où le dispositif d'alimentation a fourni une information sur ses capacités, l'actionneur choisit un profil de recharge en fonction de la réponse du dispositif d'alimentation. Le profil de recharge est avantageusement sélectionné parmi plusieurs profils correspondants aux capacités du dispositif d'alimentation et éventuellement selon l'information relative aux paramètres d'alimentation évalués. Dans un exemple de réalisation, l'actionneur sélectionne parmi les profils proposés par le dispositif d'alimentation, celui qui correspond le mieux aux besoins du bloc batterie. Dans un autre exemple de réalisation, l'actionneur comprend également plusieurs couples courant/tension qui peuvent être choisis pour correspondre au mieux aux capacités du dispositif d'alimentation.

Au cours d'une étape de transmission 500, l'actionneur informe le dispositif d'alimentation du profil sélectionné par le biais d'une requête de profil d'alimentation. Lors d'une étape 600, le dispositif d'alimentation met ensuite en place le processus de charge suivant le profil sélectionné au cours d'une étape de charge.

Dans le cas alternatif où suite à la connexion entre l'actionneur et le dispositif d'alimentation, lors de l'étape 200 l'actionneur reçoit une tension et un courant directement du dispositif d'alimentation et avant l'étape de sélection, les étapes 300 à 600 sont omises et la recharge des batteries a lieu à partir des tension et courant disponibles en entrée du deuxième connecteur CCA1.2. Il peut alors avantageusement être prévu de mettre en place un retour d'information vers l'utilisateur pour signaler une recharge non optimale, par exemple par le biais d'un clignotement particulier de la diode luminescente de l'actionneur.

Le moteur de l'actionneur peut avantageusement tourner pendant la phase de recharge.

Une interaction est alors mise en place entre le dispositif d'alimentation et l'actionneur qui permet de rendre plus efficace la charge.

En outre, le type de dispositif d'alimentation peut être détecté par l'actionneur du fait de l'échange d'information, cette information permet également d'adapter le comportement de l'actionneur.

De plus, la communication entre le dispositif d'alimentation et l'actionneur permet une sélection du meilleur profil d'alimentation pour la charge de la batterie et donc une meilleure gestion de la charge.

Par exemple, il peut être prévu que l'actionneur fournisse un retour d'information à l'utilisateur sur son état par exemple en charge ou chargé, par l'intermédiaire de voyants, par exemple de type LED, par déplacement de l'écran et/ou par la transmission d'information vers un appareil muni d'un écran de visualisation.

Dans le cas d'une charge par un panneau photovoltaïque, la charge est interrompue à chaque fois qu'un nuage masque le soleil. Dans les actionneurs de l'état de la technique, un retour d'information est envoyé à chaque arrêt de la charge et à chaque reprise de la charge, notamment par le biais d'un mouvement bref de l'écran, ce qui peut être considéré comme un dysfonctionnement de l'actionneur par l'utilisateur.

Grâce à la détection du type de dispositif d'alimentation, l'émission d'un retour d'information peut être désactivée dans le cas d'une charge par un panneau photovoltaïque évitant l'émission d'un message à chaque apparition et/ou disparition du soleil. Alternativement, il pourrait être prévu uniquement l'activation d'une ou plusieurs LEDS et non le déplacement de l'écran ou l'affichage d'un message sur un écran.

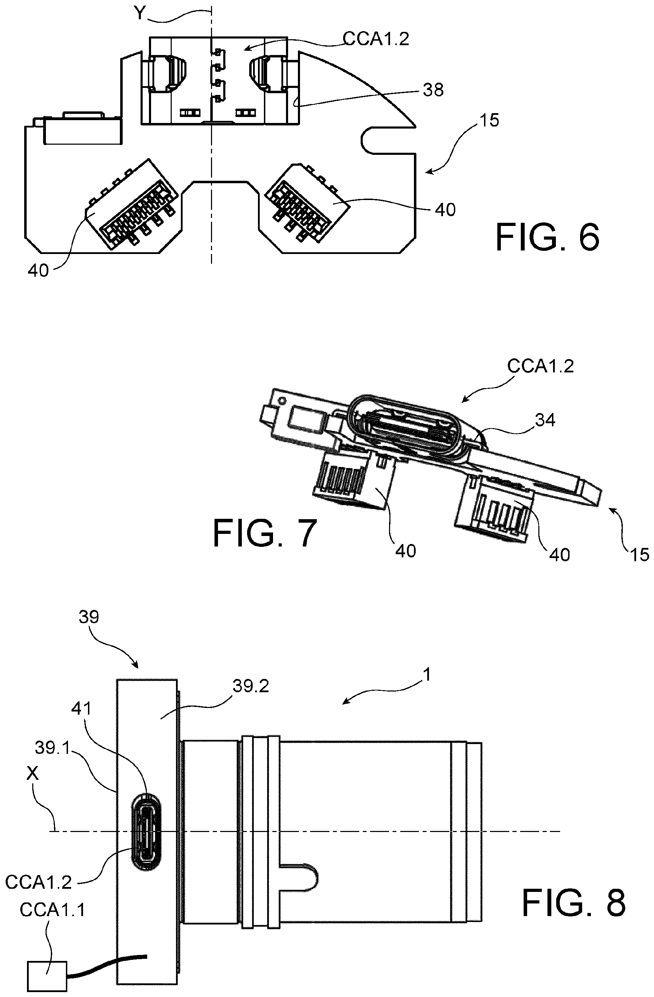

Sur les figures 6 et 7, on peut voir un exemple très avantageux d'implantation du connecteur CCA1.2 sur la deuxième carte.

La deuxième carte de circuit 15 est destinée à être disposée à une extrémité longitudinale de l'actionneur perpendiculairement à l'axe longitudinal X, de sorte que l'axe Y du connecteur est orthogonal à l'axe X. En particulier la deuxième carte est montée dans le support de couple 1 de l'actionneur, au moins en partie à l'extérieur du diamètre du carter de l'actionneur.

La deuxième carte de circuit 15 se présente sous la forme d'une carte de circuit imprimé ayant une forme générale en demi-lune configurée pour s'intégrer dans la section transversale du support de couple 1.

Le connecteur CCA1.2 est monté à travers la deuxième carte de circuit 15 qui comporte une découpe 38 débouchant dans un bord arrondie la carte 15. Dans cet exemple, le connecteur est orienté radialement de sorte que son extrémité ouverte est orientée vers l'extérieur de la carte. La deuxième carte de circuit 15 comporte des passages traversants (non visibles) pour l'insertion de pattes de fixation 34 qui sont ensuite repliées et/ou soudées sur la face opposée de la deuxième carte de circuit.

La deuxième carte de circuit 38 comporte deux connecteurs 40 sur sa face opposée qui sont connectés au connecteur et sont orientées perpendiculairement au plan de la deuxième carte de sorte que leur extrémité ouverte soit orienté dans l'axe longitudinal de l'actionneur. Cette configuration est particulièrement avantageuse car elle permet que la ou les nappes 42 reliant le connecteur à la première carte de circuit 13 (figure 1A) soient enfichées dans le connecteur dans l'axe de l'actionneur, sans être pliée.

La mise en œuvre de deux connecteurs de plus petite taille permet une intégration plus aisée qu'un seul grand connecteur. De manière préférée, les deux connecteurs 40 présentent un nombre de broches différent ce qui assure un détrompage au montage.

Un capot 39 recouvre l'extrémité longitudinale du support de couple. Il présente une forme circulaire muni d'un fond 39.1 et d'un rebord 39.2. Une fenêtre 41 est pratiquée dans le rebord du capot donnant accès à l'extrémité ouverte du deuxième connecteur CCA1.2 (figure 8).

Cette réalisation présente l'avantage d'avoir un support de couple dont l'encombrement radial est limité.

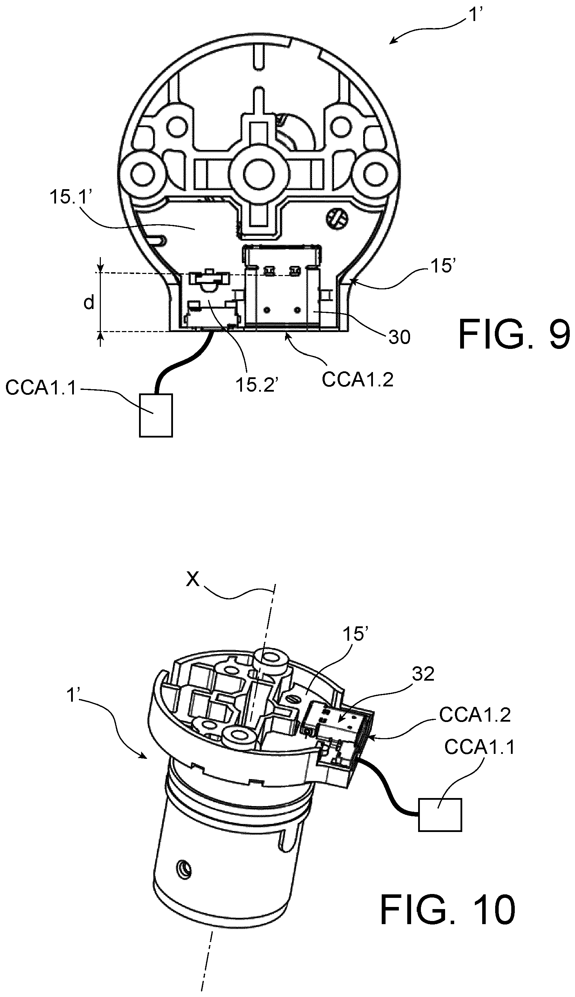

Sur les figures 9 et 10, un autre exemple de deuxième carte de circuit et un autre exemple de support de couple 1' sont représentés.

Dans cet exemple, la deuxième carte de circuit 15' comporte une partie 15.1' en forme de portion de disque correspondant à la section générale du support de couple de l'actionneur et une partie 15.2' de forme sensiblement rectangulaire en saillie de la périphérie extérieure du disque. La dimension d de la partie 15.2' dans la direction radiale est suffisante pour qu'une grande partie du corps 30 du deuxième connecteur CCA1.2 se situe en majorité en dehors du diamètre de la section circulaire du carter de l'actionneur. Cette disposition permet de libérer la zone centrale de la deuxième carte de circuit 15 dans le prolongement du carter de l'actionneur et donc la zone centrale du support de couple pour loger éventuellement des composants électroniques plus volumineux.

La zone centrale de la carte étant quasiment entièrement disponible, il est possible de prévoir une découpe capable d'accueillir différentes formes de support de reprise d'effort et ainsi rendre l'actionneur compatible avec un grand nombre de dispositifs de support pour des dispositifs à écran solaire ou d'occultation.

Le carter de l'actionneur présente une section transversale circulaire. Le support de couple peut présenter une section transversale sur sa partie de plus grand diamètre en forme de disque, munie d'une saillie sensiblement rectangulaire. Le capot présente une forme adaptée. Sa paroi latérale comporte une fenêtre pour l'accès au connecteur.

Le support de couple 1' est conformé pour entourer la deuxième carte 36 avec sa saillie.

Dans l'exemple représenté, le connecteur CCA1.2 de l'actionneur est un connecteur femelle. En variante, l'actionneur comporte un connecteur CCA1.2 mâle.

Un actionneur dans lequel le connecteur CCA1.2 serait disposé de sorte qu'il soit parallèle à l'axe X ou incliné par rapport à l'axe X ne sort pas du cadre de la présente demande.

## Revendications

1. Actionneur pour l'entraînement entre plusieurs positions d'un écran de protection solaire ou d'occultation, comportant un carter (2) logeant un moteur électrique (4), un réducteur (6), un circuit de contrôle (12), ledit actionneur étant destiné à être connecté à un bloc batterie externe (8) destiné à fournir la puissance électrique du moteur et du circuit de contrôle, ledit actionneur comportant au moins un connecteur (CCA1) relié audit circuit de contrôle, ledit connecteur étant configuré pour l'alimentation électrique de l'actionneur **caractérisé en ce que** ledit connecteur est configuré pour au moins transmettre des informations sur la tension et sur le courant aux bornes du bloc batterie, et **en ce que** le circuit de contrôle (12) comporte des moyens d'acquisition des informations sur la tension et sur le courant aux bornes du bloc batterie et des moyens de génération d'au moins un signal sur la base desdites informations, dans lequel le circuit de contrôle est configuré pour déterminer si le bloc batterie est en phase de charge ou non, désigné état de charge du bloc batterie, et pour effectuer des mesures du niveau de charge du bloc batterie en phase de charge à une fréquence supérieure à une fréquence de mesure en dehors d'une phase de charge.

2. Actionneur selon la revendication 1, dans lequel le au moins un signal est un message d'information à l'utilisateur.

3. Actionneur selon la revendication 1 ou 2, dans lequel le circuit de contrôle est configuré pour transmettre une information relative à l'état de charge du bloc batterie.

4. Actionneur selon l'une des revendications 1 à 3, dans lequel le circuit de contrôle est configuré pour gérer la charge du bloc batterie par un dispositif d'alimentation.

5. Actionneur selon l'une des revendications 1 à 4, dans lequel le connecteur (CCA1) est configuré pour être relié par une connexion filaire à la fois au bloc batterie et à un dispositif d'alimentation.

6. Actionneur selon la revendication 5, dans lequel le connecteur (CCA1) comporte une pluralité de broches, une partie des broches étant utilisée pour l'alimentation et une autre partie pour la transmission d'informations.

7. Actionneur selon la revendication 5, dans lequel le connecteur comporte un premier connecteur (CCA1.1) configuré pour être relié au bloc batterie et un deuxième connecteur (CCA1.2) destiné à être relié au dispositif d'alimentation.

8. Actionneur selon la revendication 7, dans lequel le deuxième connecteur (CCA1.2) répond à la norme USB^{®} type C 3.0 et est avantageusement configuré pour transmettre des informations suivant une technologie de fourniture d'énergie PD (Power Delivery en terminologie anglosaxonne) et éventuellement selon une technologie d'alimentation programmable PPS (Programmable Power Supply en terminologie anglosaxonne).

9. Actionneur selon l'une des revendications 1 à 8, dans lequel le circuit de contrôle comporte des moyens de transmission d'une requête d'un profil d'alimentation comprenant au moins une tension fixe et un courant maximum au dispositif d'alimentation.

10. Actionneur selon la revendication 9, dans lequel le circuit de contrôle comprend un régulateur disposé entre le deuxième connecteur (CCA1.2) et le bloc batterie, le régulateur étant configuré pour charger le bloc batterie à partir de la tension et du courant fourni par le dispositif d'alimentation.

11. Actionneur selon la revendication 9 ou 10, dans lequel le circuit de contrôle est configuré pour gérer l'alimentation du bloc batterie selon un premier mode lorsque la tension et le courant en entrée du deuxième connecteur (CCA1.2) correspondent au profil d'alimentation requis par l'actionneur et selon un deuxième mode lorsque la tension et le courant en entrée du deuxième connecteur (CCA1.2) diffèrent du profil d'alimentation requis par l'actionneur.

12. Actionneur selon l'une des revendications 1 à 11, dans lequel le circuit de contrôle comprend une première carte de circuit portant un circuit de contrôle du moteur électrique et une deuxième carte de circuit portant le connecteur (CCA1), la deuxième carte étant disposée perpendiculairement à l'axe longitudinal (X) à une extrémité longitudinale du carter, le connecteur (CCA1) étant orienté radialement par rapport l'axe longitudinal (X), le connecteur (CCA1) comprenant avantageusement un plan de symétrie, dans lequel la deuxième carte de circuit comporte une découpe dans laquelle est monté le connecteur et dans lequel ledit plan de symétrie est sensiblement confondu avec un plan dans lequel s'étend la deuxième carte {36).

13. Ensemble comportant un actionneur selon l'une des revendications 1 à 12, un bloc batterie et un dispositif d'alimentation (20) du bloc batterie externe (8).

14. Ensemble selon la revendication 13, dans lequel l'actionneur est un actionneur selon la revendication 7 ou 8, et dans lequel le dispositif d'alimentation (20) comporte au moins un connecteur compatible avec le deuxième connecteur (CCA1.2) de l'actionneur et le dispositif d'alimentation est configuré pour suivre des instructions du circuit de contrôle de l'actionneur.

15. Procédé de fonctionnement d'un ensemble selon la revendication 13 ou 14, comportant les étapes :
- Réception par le circuit de contrôle d'informations sur la tension et le courant du bloc batterie,
- Envoi d'informations à un utilisateur et/ ou au dispositif d'alimentation et/ou d'instructions au dispositif d'alimentation par le circuit de contrôle.

## Patentansprüche

1. Aktuator für eines Sonnenschutzes oder Beschattungsschirms den Antrieb zwischen mehreren Positionen, umfassend ein Gehäuse (2), das einen elektrischen Motor (4), ein Getriebe (6) und eine Steuerschaltung (12) aufnimmt, wobei der Aktuator ausgelegt ist, um mit einer externen Blockbatterie (8) verbunden zu sein, die ausgelegt ist, um den elektrischen Strom des Motors und der Steuerschaltung zu liefern, wobei der Aktuator mindestens einen Anschluss (CCA1) umfasst, der mit der Steuerschaltung verbunden ist, wobei der Anschluss für die elektrische Stromversorgung des Aktuators konfiguriert ist, **dadurch gekennzeichnet, dass** der Anschluss konfiguriert ist, um mindestens Informationen über die Spannung und über den Strom an die Klemmen der Blockbatterie zu übertragen, und dadurch, dass die Steuerschaltung (12) Mittel zur Erfassung der Informationen über die Spannung und über den Strom an die Klemmen der Blockbatterie und Mittel zur Erzeugung mindestens eines Signals auf der Grundlage der Informationen umfasst, wobei die Steuerschaltung konfiguriert ist, um zu bestimmen, ob sich die Blockbatterie in der Ladephase befindet oder nicht, bezeichnet als Ladezustand der Blockbatterie, und um Messungen des Ladeniveaus der Blockbatterie in der Ladephase mit einer Frequenz durchzuführen, die höher als eine Messfrequenz außerhalb einer Ladephase ist.

2. Aktuator nach Anspruch 1, wobei das mindestens eine Signal eine Informationsmeldung an den Benutzer ist.

3. Aktuator nach Anspruch 1 oder 2, wobei die Steuerschaltung konfiguriert ist, um eine Information mit Bezug auf den Ladezustand der Blockbatterie zu übertragen.

4. Aktuator nach einem der Ansprüche 1 bis 3, wobei die Steuerschaltung konfiguriert ist, um die Ladung der Blockbatterie durch eine Stromversorgungsvorrichtung zu verwalten.

5. Aktuator nach einem der Ansprüche 1 bis 4, wobei der Anschluss (CCA1) konfiguriert ist, um über eine Drahtverbindung sowohl mit der Blockbatterie als auch mit einer Stromversorgungsvorrichtung verbunden zu sein.

6. Aktuator nach Anspruch 5, wobei der Anschluss (CCA1) eine Vielzahl von Kontaktstiften umfasst, wobei ein Teil der Kontaktstifte für die Stromversorgung und ein anderer Teil für die Übertragung von Informationen verwendet wird.

7. Aktuator nach Anspruch 5, wobei der Anschluss einen ersten Anschluss (CCA1.1) umfasst, der konfiguriert ist, um mit der Blockbatterie verbunden zu sein, und einen zweiten Anschluss (CCA1.2), der ausgelegt ist, um mit der Stromversorgungsvorrichtung verbunden zu sein.

8. Aktuator nach Anspruch 7, wobei der zweite Anschluss (CCA1.2) dem USB^{®} Typ-C 3.0-Standard entspricht und vorteilhafterweise konfiguriert ist, um Informationen gemäß einer Energieübertragungstechnologie PD (Power Delivery auf Englisch) und optional gemäß einer programmierbaren Stromversorgungstechnologie PPS (Programmable Power Supply auf Englisch) zu übertragen.

9. Aktuator nach einem der Ansprüche 1 bis 8, wobei die Steuerschaltung Mittel zum Übertragen einer Anfrage eines Stromversorgungsprofils, umfassend mindestens eine feste Spannung und einen maximalen Strom, an die Stromversorgungsvorrichtung umfasst.

10. Aktuator nach Anspruch 9, wobei die Steuerschaltung einen Regler umfasst, der zwischen dem zweiten Anschluss (CCA1.2) und der Blockbatterie angeordnet ist, wobei der Regler konfiguriert ist, um die Blockbatterie ausgehend von der Spannung und vom Strom, der von der Stromversorgungsvorrichtung geliefert wird, zu laden.

11. Aktuator nach Anspruch 9 oder 10, wobei die Steuerschaltung konfiguriert ist, um die Stromversorgung der Blockbatterie gemäß einem ersten Modus zu verwalten, wenn die Spannung und der Strom am Eingang des zweiten Anschlusses (CCA1.2) dem Stromversorgungsprofil entsprechen, das vom Aktuator erfordert wird, und gemäß einem zweiten Modus, wenn die Spannung und der Strom am Eingang des zweiten Anschlusses (CCA1.2) vom Stromversorgungsprofil, das vom Aktuator erfordert wird, verschieden sind.

12. Aktuator nach einem der Ansprüche 1 bis 11, wobei die Steuerschaltung eine erste Leiterplatte umfasst, die eine Steuerschaltung des elektrischen Motors trägt, und eine zweite Leiterplatte, die den Anschluss (CCA1) trägt, wobei die zweite Leiterplatte senkrecht zur Längsachse (X) an einem Längsende des Gehäuses angeordnet ist, wobei der Anschluss (CCA1) radial mit Bezug auf die Längsachse (X) ausgerichtet ist, wobei der Anschluss (CCA1) vorteilhafterweise eine Symmetrieebene umfasst, in der die zweite Leiterplatte eine Aussparung umfasst, in der der Anschluss montiert ist, und in der die Symmetrieebene im Wesentlichen mit einer Ebene zusammenfällt, in der sich die zweite Platte (36) erstreckt.

13. Anordnung, umfassend einen Aktuator nach einem der Ansprüche 1 bis 12, eine Blockbatterie und eine externe Stromversorgungsvorrichtung (20) der Blockbatterie (8).

14. Anordnung nach Anspruch 13, wobei der Aktuator ein Aktuator nach Anspruch 7 oder 8 ist, und wobei die Stromversorgungsvorrichtung (20) mindestens einen Anschluss umfasst, der mit dem zweiten Anschluss (CCA1.2) des Aktuators kompatibel ist, und die Stromversorgungsvorrichtung konfiguriert ist, um Anweisungen der Steuerschaltung des Aktuators zu folgen.

15. Verfahren zum Betreiben einer Anordnung nach Anspruch 13 oder 14, umfassend die folgenden Schritte:
- Empfangen von Informationen über die Spannung und den Strom der Blockbatterie durch die Steuerschaltung,
- Senden von Informationen an einen Benutzer und/oder an die Stromversorgungsvorrichtung und/oder von Anweisungen an die Stromversorgungsvorrichtung durch die Steuerschaltung.

## Claims

1. An actuator for driving a solar protection or blackout screen between multiple positions , comprising a casing (2) housing an electric motor (4), a reducer (6), a control circuit (12), said actuator being intended to be connected to an external battery pack (8) intended to provide the electrical power for the motor and the control circuit, said actuator comprising at least one connector (CCA1) connected to said control circuit, said connector being configured for the electrical supply of the actuator **characterized in that** said connector is configured to at least transmit information on the voltage and current at the terminals of the battery pack, and **in that** the control circuit (12) comprises means for acquiring information on the voltage and current at the terminals of the battery pack and means for generating at least one signal based on said information, wherein the control circuit is configured to determine if the battery pack is in a charging phase or not, designating the state of charge of the battery pack, and to perform measurements of the charge level of the battery pack in the charging phase at a frequency higher than a measurement frequency outside a charging phase.

2. The actuator according to claim 1, wherein the at least one signal is an information message to the user.

3. The actuator according to claim 1 or 2, wherein the control circuit is configured to transmit information relative to the state of charge of the battery pack.

4. The actuator according to one of claims 1 to 3, wherein the control circuit is configured to manage the charging of the battery pack by a power supply device.

5. The actuator according to one of claims 1 to 4, wherein the connector (CCA1) is configured to be connected by a wired connection to both the battery pack and a power supply device.

6. The actuator according to claim 5, wherein the connector (CCA1) comprises a plurality of pins, some of the pins being used for power supply and others for information transmission.

7. The actuator according to claim 5, wherein the connector includes a first connector (CCA1.1) configured to be connected to the battery pack and a second connector (CCA1.2) intended to be connected to the power supply device.

8. The actuator according to claim 7, wherein the second connector (CCA1.2) complies with the USB^{®} type C 3.0 standard and is advantageously configured to transmit information according to a Power Delivery (PD) technology and possibly according to a Programmable Power Supply (PPS) technology.

9. The actuator according to one of claims 1 to 8, wherein the control circuit includes means for transmitting a request for a power profile comprising at least one fixed voltage and a maximum current to the power supply device.

10. The actuator according to claim 9, wherein the control circuit comprises a regulator arranged between the second connector (CCA1.2) and the battery pack, the regulator being configured to charge the battery pack from the voltage and current supplied by the power supply device.

11. The actuator according to claim 9 or 10, wherein the control circuit is configured to manage the power supply of the battery pack according to a first mode when the voltage and current at the input of the second connector (CCA1.2) correspond to the power profile required by the actuator and according to a second mode when the voltage and current at the input of the second connector (CCA1.2) differ from the power profile required by the actuator.

12. The actuator according to one of claims 1 to 11, wherein the control circuit comprises a first circuit board carrying a control circuit for the electric motor and a second circuit board carrying the connector (CCA1), the second circuit board being arranged perpendicularly to the longitudinal axis (X) at a longitudinal end of the casing, the connector (CCA1) being oriented radially relative to the longitudinal axis (X), the connector (CCA1) advantageously comprising a plane of symmetry, wherein the second circuit board includes a cut-out wherein the connector is mounted and wherein the said plane of symmetry is substantially coincident with a plane wherein the second board (36) extends.

13. An assembly comprising an actuator according to one of claims 1 to 12, a battery pack, and a power supply device (20) for the external battery pack (8).

14. The assembly according to claim 13, wherein the actuator is an actuator according to claim 7 or 8, and wherein the power supply device (20) includes at least one connector compatible with the second connector (CCA1.2) of the actuator and the power supply device is configured to follow instructions from the actuator control circuit.

15. A method of operating an assembly according to claim 13 or 14, comprising the steps:
- Receiving information on the voltage and the current of the battery pack by the control circuit,
- Sending information to a user and/or to the power supply device and/or instructions to the power supply device by the control circuit.
